(19) Europäisches Patentamt
European Patent Office
Office européen des brevets

(11) **EP 0 761 348 B1**

(12) # EUROPEAN PATENT SPECIFICATION

(45) Date of publication and mention
of the grant of the patent:
**22.12.1999 Bulletin 1999/51**

(51) Int. Cl.$^6$: **B22F 9/16**

(21) Application number: **95306278.3**

(22) Date of filing: **07.09.1995**

(54) **Method of producing high-purity ultra-fine metal powder by leaching**

Verfahren zur Herstellung von hochreinem ultrafeinem Metallpulver durch Auslaugen

Procédé de préparation de poudre métallique très fine ultrapure par lixivation

(84) Designated Contracting States:
**AT BE CH DE DK ES FR GB IE IT LI LU NL SE**

(43) Date of publication of application:
**12.03.1997 Bulletin 1997/11**

(73) Proprietor:
**Nanopowders Industries (Israel) Limited
Kfar Saba 44425 (IL)**

(72) Inventor: **Khasin, Ernst E
Rishon-le-Zion 75241 (IL)**

(74) Representative: **Shaw, Laurence
5th Floor,
Metropolitan House,
1 Hagley Road,
Edgbaston
Birmingham B16 8TG (GB)**

(56) References cited:
**EP-A- 0 214 644** **GB-A- 951 990**

**Description**

The invention relates to a method of producing metal powders, and particularly to a method of producing high-purity, ultra-fine metal powders. The invention is particularly adapted to producing silver powders of high-purity and ultra-finess, and therefore is described below with respect to this particular application but is not limited to this metal.

There are many uses for silver powders, including in electronic processes, batteries, conductive coatings and shielding materials, conductive inks, water purification, catalyst manufacture and dental amalgams. Silver powders may be produced by chemical precipitation, atomisation or milling, thermal decomposition and electrochemical deposition. Unfortunately these methods cannot be used to make silver powder in ultra-fine form, i.e. with an average particle size less than 150 nm. Such powders are required for catalysts in the oxygen electrodes of fuel cells, high-performance positive electrodes of Ag-Zn, Ag-H$_2$ and Ag-Cd batteries, in low-temperature heat exchangers, conductive glues and films, conductive and semi-conductive polymers, adjustable resistors, and dispersion-strengthened materials.

USSR Inventor's Certificate No. 267079 published July 16, 1970, discloses a method of producing ultra-fine silver powder based on the "Raney" method. The method therein disclosed involves the following procedure: form a silver-aluminium alloy having a silver content of up to 50% by weight; roll the alloy into foil strips having a thickness of 0.5-5 mm; surface-clean the foil strips, in order to remove aluminium oxide and other impurities; heat-treat the foil strips at 550° C in a protective atmosphere (e.g. argon), and maintain this temperature for about 1.5 hours to form a homogenised supersaturated solid solution of silver in aluminum, followed by quenching in water to fix the structure; leach out the aluminum from the alloy in a 20-40% solution of KOH or NaOH at a temperature of 0-80° C; wash-out the powder; and dry the powder. The powder is a very porous silver agglomerate (porosity of approximately 45-85%) consisting of particles having an average size of 30-150 nm, a spheroidal shape, and a crystal face on the surface. These agglomerates are very weak, and the cohesive strength between particles is extremely low, enabling the agglomerates to be easily crushed by milling to form very fine particles.

While the technique described in the above publication produced ultra-fine silver particles, this technique has been found to have two drawbacks: The amount of residual aluminum in the silver powder made by this technique is relatively high, being about 0.5%; and the heat treatment operation, to be performed in a protective (e.g. argon) atmosphere, is very complicated and costly.

It is one object of the invention to provide a method of producing metal powder, particularly silver powder, having a significantly higher degree of purity than that obtainable by the above-described technique. Another object is to provide such a method requiring a simpler and less expensive heat treatment operation.

According to the invention as claimed in claim 1 there is provided a method of producing a high-purity ultra-fine powder of a first metal, the method comprising forming an alloy of the first metal and a second metal, and leaching out the second metal to provide a porous agglomerate of particles of the first metal **characterised by** subjecting the agglomerate to a second leaching treatment with agitation to form the high purity ultra-fine powder. Prefered embodiments of the method of the invention are claimed in claims 2-14.

The agitation may be effected by stirring and/or ultrasonic vibration. The agitation may be done by thorough stirring using conventional heavy-duty stirrers or dispersing units. The ultrasonic vibrations may be produced according to various known techniques, e.g. utilising electromagnetic, magnetostrictive, or piezoelectric transducers. The transducers may be mounted internally, for example at the sides of the treatment tank, or externally of the tank, or the treatment tank may be enclosed in a second container holding the transducer and filled with an intermediate liquid.

Preferably, the ultrasonic vibrations are at a frequency of about 15 to about 300 KHz; in the example described below, the frequency is 40 KHz. Also, the ultrasonic vibrations are preferably applied for a period of from about 10 to about 60 minutes, the period being 25 minutes in the example described below. The leaching agent is preferably an alkaline solution providing an excess of hydroxyl ions, the leaching agent in both leaching treatments is a 20-45%, preferably a 35%, solution of KOH or NaOH in the example described below.

It has been found that this novel technique significantly reduces the residual aluminum in the silver powder thereby significantly increasing its purity. Thus, whereas the technique described in the above publication resulted in residual aluminum in the silver powder of about 0.5% by weight the amount of residual aluminum remaining in the silver powder produced according to the invention is up to 0.2% by weight.

Therefore, the invention also relates to an ultrafine powder consisting of silver and up to 0.2 % by weight of aluminium, both having a particle size of about 30 to about 150 nm.

According to another feature of the invention, the preliminary heat-treating of the alloy is performed in an air atmosphere and is followed by a surface-cleaning step, which can be done mechanically or chemically. For example, the alloy may be immersed in a 10-15% solution of KOH or NaOH, rinsed, immersed in a 30-40% solution of HNO$_3$ and rinsed again. Performing the heat treating step in an air atmosphere, rather in a controlled (e.g. argon) atmosphere, substantially simplifies and lowers the cost of the treatment operation. This advantage is obtained because the surface-cleaning operation Is performed after the heat-treatment, rather than before as in the above-described technique, so that any surface oxidation or impurities produced during the melting, rolling and heat treatment operation, even in an air atmosphere, are removed by the subsequent surface-cleaning operation.

While we do not wish the scope of the invention to be limited by the following theory, we provide a possible explanation how the method of the present invention works, particularly when applied to producing pure silver powders. The amount of residual aluminum in the produced silver powder is determined by the efficiency of aluminum removal during the leaching. It is believed that the leaching operation involves two steps:

1. The reaction of aluminum with water, as follows:

$$2Al+6H_2O \rightarrow 2Al(OH)_3+3H2\uparrow \qquad (1)$$

The reaction of the aluminum hydroxide produced in step 1 with an excess of hydroxyl tons, is as follows:

$$Al(OH)_3+KOH \rightarrow K[Al(OH)_4] \qquad (2)$$

The overall reaction may thus be expressed as follows:

$$2Al+2KOH+6H_2O \rightarrow 2K[Al(OH)_4]+3H_2\uparrow \qquad (3)$$

The above reaction requires a large excess of hydroxyl ions. If there is a deficiency, or even an approximate equivalency, of the base, the neutral "hydroxide" produced (which is actually a conglomeration of hydrated aluminum ions, water molecules, and hydroxyl ions in the form of a large and indefinite molecule) is precipitated as a gel which is white in colour.

The leaching operation in the previously-known technique forms agglomerates of silver powder having a very fine porous structure. This structure, and the produced hydrogen released during the reaction (expression 1 above), appears to limit the excess hydroxyl ions delivered to the reaction zone. This apparently results in precipitation of the "hydroxide" in the fine pores of the agglomerates, which blocks the pores. As a result, some aluminum does not react with the alkaline solution and remains in the powder in the form of the supersaturated solid solution.

It therefore appears that the precipitated hydroxide and unleached aluminum in the supersaturated solid solution are the two main factors which cause aluminum to remain in the produced silver powder.

This relatively high amount of residual aluminum is substantially reduced in the invention, wherein, after the leaching operation, the resultant porous silver agglomerate is mixed with a fresh batch of leaching agent and is subjected to thorough stirring and ultrasonic vibration. This second leaching treatment ensures that there will be a large excess of hydroxyl ions for the above reaction, which hydroxyl ions will penetrate more deeply into the pores of the agglomerate of silver powder. The stirring and ultrasonic vibration tend to crush and pulverise the agglomerate, thereby increasing the surface area of the solid particles exposed to the leaching agent, further enhancing the penetration of the leaching agent to significantly decrease the amount of aluminum which does not react with the alkaline solution.

The amount of residual aluminum could also be reduced by increasing the temperature of the leaching treatment to say 60-80° C, but in this case the final powder will be much coarser, with much higher agglomerate strength.

In the disclosure above, the first metal is silver and the second is aluminium. The invention ls applicable to other combinations such as Ag-Mg, Rh-Al and the like. Depending on the metals involved the leaching agent may be alkali as indicated or It could be acidic. The first metal may itself be composed of more than one metal: for example Ag+Cu or Ag+Au; in these cases the second metal can be aluminium and the product is a high purity ultra-fine powder comprising a mixture of the metals.

In order that the invention may be well understood it will now be described by way of illustration only, with reference to the following examples.

**Example 1**

0.5 Kg of Ag-Al alloy (40% Ag) was made from 0.2. Kg Ag (purity 99.99) and 0.3 Kg Al (purity 99.99) in a graphite crucible in an induction furnace. The alloy was poured into a cast iron mould, to produce an ingot of a size of 60 x 20 x 107 mm. The ingot was then rolled in a twin rolling mill to produce film strips of a thickness 1.5 - 2.0 mm. The strips were then heated in an air batch furnace to 550°C, maintained at this temperature for two hours and quenched in water. Chemical surface cleaning of the strips was then carried out by immersing them in a 15%-solution of KOH, then in water, then in a 30% solution of $HNO_3$, and finally water again.

The strips were subjected to a first leaching treatment. The leaching was carried out in 4 litres 25% KOH at 30°C for a period of 12 hours. A special bath made from stainless steel with water cooled walls was used for this operation.

After the leaching was finished, 0.2 Kg of agglomerates of the silver powder formed as a result of the leaching operation was transferred into a smaller tank made from stainless steel and flooded with 0.75 litres fresh 35% KOH. The mix was stirred using a Kitchen Aid stirrer, Model K-5SS (325W), at a speed of the second position (about 25 RPM), for a time of 15 minutes. Ultrasonic vibration at a frequency of 40 KHz was applied to the tank for 25 minutes. The ultrasonic bath used was "Calmas" model Transonic T460/h, with a power output of 285 watts, and water was used as the intermediate liquid in the bath. Following this second leaching treatment, the resulting powder was washed out and dried.

Chemical analysis showed the aluminium content of the powder to be as follows:

| 1. | After the leaching operation | 0.68% |
|---|---|---|
| 2. | After the second leaching treatment involving stirring and ultrasonic vibration | 0.13% |

Following are the main properties of the powder resulting from the above-described method:

Specific surface area: $7m^2$/gram
Average particle size: 85nm
Silver content: greater than 99.85%
Apparent density: $2.1 \text{ g cm}^{-3}$

**Example 2**

The method of Example 1 was repeated using in the second leaching treatment Kinematica dispersion unit model Polytron PT 6000 at a speed of 9000 rpm for a time of 3 minutes. The aluminium content after the first leaching was 0.58% by weight and after the second leaching treatment (with agitation but no ultrasonic vibration) the content was 0.11%.

**Claims**

1. A method of producing a high-purity ultra-fine powder of a first metal, the method comprising forming an alloy of the first metal and a second metal, and leaching out the second metal to provide a porous agglomerate of particles of the first metal **characterised by** subjecting the agglomerate to a second leaching treatment with agitation to form the high purity ultra-fine powder.

2. A method according to Claim 1, wherein the agitation is effected by stirring of the agglomerate and the leaching agent with or without the application of ultrasonic vibration.

3. A method according to Claim 2, wherein the ultrasonic vibrations are at a frequency of from about 15 to about 300 KHz.

4. A method according to Claim 2 or 3, wherein the ultrasonic vibrations are applied for a period of from about 10 to about 60 minutes.

5. A method according to any preceding Claim, wherein the leaching agent in both leaching treatments is an alkaline solution providing an excess of hydroxyl ions.

6. A method according to Claim 5, wherein the leaching agent in both leaching treatments is a 20-45% solution of KOH or NaOH.

7. A method according to any preceding Claim, wherein the alloy is rolled to a strip thickness of from about 0.5 to about 5mm before being subject to the first leaching treatment.

8. A method according to Claim 7, wherein the strip is heat treated in a preliminary step to form a homogeneous phase of the metals.

9. A method according to Claim 8, wherein the heat treating step is performed in an air atmosphere and is followed by a surface-cleaning step.

10. A method according to Claim 9, wherein the surface-cleaning step comprises immersing the super-saturated solid solution alloy in a 10-15% solution of KOH or NaOH, rinsing the alloy, immersing it in a 30-40% solution of $HNO_3$ and rinsing the alloy.

11. A method according to any preceding Claim, wherein the first metal is silver and the second metal is aluminum.

12. A method according to Claim 11, wherein the silver is present up to 50% by weight of the alloy, and wherein the alloy strips are heat treated to form a supersaturated solid solution of silver in aluminum before the first leaching treatment.

13. A method according to Claim 1, 2, 3, 4, 7 or 8, wherein the leaching agent in the second leaching treatment is acidic.

14. A method according to any preceding Claim, wherein the first metal comprises a mixture of metals.

15. Ultrafine powder consisting of silver and up to 0.2% by weight of aluminium, both having a particle size of about 30 to about 150nm.

**Patentansprüche**

1. Verfahren zur Herstellung eines ultrafeinen Pulvers mit hoher Reinheit aus einem ersten Metall, wobei das Verfahren umfaßt: Ausbilden einer Legierung aus einem ersten Metall und einem zweiten Metall, Auslaugen des zweiten Metalls zur Schaffung eines porösen Agglomerats aus Teilchen des ersten Metalls,
**dadurch gekennzeichnet**,
daß das Agglomerat einer zweiten Auslaugungsbehandlung unter Bewegen zur Ausbildung von ultrafeinem Pulver mit hoher Reinheit unterzogen wird.

2. Verfahren nach Anspruch 1, worin das Bewegen durch Rühren des Agglomerats und des Auslaugungsmittels mit oder ohne Anwendung von Ultraschallschwingungen bewirkt wird.

3. Verfahren nach Anspruch 2, worin die Ultraschallschwingungen eine Frequenz von etwa 15 bis 300 kHz besitzen.

4. Verfahren nach Anspruch 2 oder 3,
worin die Ultraschallschwingungen für eine Periode von etwa 10 bis 60 Minuten angewandt werden.

5. Verfahren nach einem der vorhergehenden Ansprüche, worin das Auslaugungsmittel in beiden Auslaugungsbehandlungen eine alkalische Lösung ist, die einen Überschuß an Hydroxylionen schafft.

6. Verfahren nach Anspruch 5, worin das Auslaugungsmittel in beiden Auslaugungsbehandlungen eine 20 bis 45%-ige Lösung aus KOH oder NaOH ist.

7. Verfahren nach einem der vorhergehenden Ansprüche, worin die Legierung zu einer Streifendicke von etwa 0,5 bis etwa 5 mm vor der ersten Auslaugungsbehandlung gerollt wird.

8. Verfahren nach Anspruch 7, worin der Streifen in einem vorläufigen Schritt zur Ausbildung einer homogenen Phase der Metalle hitzebehandelt wird.

9. Verfahren nach Anspruch 8, worin der Hitzebehandlungsschritt in einer Luftatmosphäre durchgeführt wird und nachfolgend ein die Oberfläche reinigender Schritt durchgeführt wird.

10. Verfahren nach Anspruch 9, worin der die Oberfläche reinigende Schritt umfaßt: Eintauchen der supergesättigten Legierungsfeststofflösung in eine 10 bis 15 %-ige Lösung aus KOH oder NaOH, Spülen der Legierung, deren Eintauchen in eine 30 bis 40 %-ige Lösung aus $HNO_3$ und Spülen der Legierung.

11. Verfahren nach einem der vorhergehenden Ansprüche, worin das erste Metall Silber und das zweite Metall Aluminium ist.

12. Verfahren nach Anspruch 11, worin das Silber bis zu 50 Gew.-%, bezogen auf die Legierung, vorhanden ist und worin die Legierungsstreifen zur Ausbildung einer supergesättigten Silberfeststofflösung in Aluminium vor der ersten Auslaugungsbehandlung hitzebehandelt werden.

13. Verfahren nach Anspruch 1, 2, 3, 4, 7 oder 8, worin das Auslaugungsmittel in der zweiten Auslaugungsbehandlung sauer ist.

14. Verfahren nach einem der vorhergehenden Ansprüche, worin das erste Metall eine Mischung aus Metallen umfaßt.

15. Ultrafeines Pulver, bestehend aus Silber und bis zu 0,2 Gew.-% Aluminium, wobei beide eine Teilchengröße von etwa 30 bis etwa 150 nm aufweisen.

## Revendications

1. Procédé pour préparer une poudre ultrafine de haute pureté d'un premier métal, le procédé comprenant la formation d'un alliage du premier métal et d'un second métal, et la lixiviation du second métal pour produire un agglomérat poreux de particules du premier métal, caractérisé par le fait de soumettre l'agglomérat à un second traitement de lixiviation sous agitation pour former la poudre ultrafine de haute pureté.

2. Procédé selon la revendication 1, dans lequel l'agitation s'effectue en remuant l'agglomérat et l'agent de lixiviation avec ou sans application de vibrations ultrasonores.

3. Procédé selon la revendication 2, dans lequel les vibrations ultrasonores s'élèvent à une fréquence comprise entre environ 15 et environ 300 KHz.

4. Procédé selon la revendication 2 ou 3, dans lequel les vibrations ultrasonores sont appliquées pendant une période comprise entre environ 10 et environ 60 minutes.

5. Procédé selon l'une quelconque des revendications précédentes, dans lequel l'agent de lixiviation entrant en jeu dans les deux traitements par lixiviation est une solution alcaline fournissant un excédant d'ions hydroxyle.

6. Procédé selon la revendication 5, dans lequel l'agent de lixiviation entrant en jeu dans les deux traitements par lixiviation est une solution de KOH ou NaOH à 20-45 %.

7. Procédé selon l'une quelconque des revendications précédentes, dans lequel l'alliage est laminé pour obtenir une épaisseur de bande comprise entre environ 0,5 et 5 mm avant de le soumettre au premier traitement de lixiviation.

8. Procédé selon la revendication 7, dans lequel la bande est traitée thermiquement lors d'une étape préliminaire pour former une phase homogène des métaux.

9. Procédé selon la revendication 8, dans lequel l'étape de traitement thermique est réalisée dans une atmosphère d'air et est suivie d'une étape de nettoyage en surface.

10. Procédé selon la revendication 9, dans lequel l'étape de nettoyage en surface comprend l'immersion de l'alliage en solution solide sursaturée dans une solution de KOH ou NaOH de 10-15 %, le rinçage de l'alliage, son immersion dans une solution de $HNO_3$ à 30-40 % et le rinçage de l'alliage.

11. Procédé selon l'une quelconque des revendications précédentes, dans lequel le premier métal est l'argent et le second métal est l'aluminium.

12. Procédé selon la revendication 11, dans lequel l'argent est présent à raison de 50 % en poids de l'alliage, et dans lequel les bandes d'alliage sont traités thermiquement pour former une solution solide sursaturée d'argent dans l'aluminium avant le premier traitement de lixiviation.

13. Procédé selon la revendication 1, 2, 3, 4, 7 ou 8, dans lequel l'agent de lixiviation du second traitement par lixiviation est acide.

14. Procédé selon l'une quelconque des revendications précédentes, dans lequel le premier métal comprend un mélange de métaux.

**15.** Poudre ultrafine se composant d'argent et jusqu'à 0,2 % en poids d'aluminium, ayant tous deux une granulométrie comprise entre environ 30 et environ 150 nm.